# EUROPEAN PATENT APPLICATION

(11) **EP 4 498 502 A1**
(43) Date of publication of application: **29.01.2025**
(21) Application number: 22964032.1
(22) Date of filing: 04.11.2022
(51) Int. Cl.: H01M 50/516, H01M 50/503, H01M 50/553

(54) **END COVER, BATTERY CELL, BATTERY AND ELECTRIC DEVICE**

(71) Applicant: Contemporary Amperex Technology Co., Limited, Ningde, Fujian 352100 (CN)
(72) Inventor: SU, Huasheng, Ningde, Fujian 352100 (CN); XING, Chengyou, Ningde, Fujian 352100 (CN); LI, Quankun, Ningde, Fujian 352100 (CN)
(74) Representative: von Tietzen und Hennig, Nikolaus
(86) International application number: PCT/CN2022/129897
(87) International publication number: WO 2024/092724

(57) **Abstract**

An end cap, a battery cell, a battery, and an electrical device are disclosed. The end cap (22) includes: an end cap body (221), where a hole (222) is created on the end cap body (221); a first connection structure (223), including a first metal, where the first connection structure (223) is disposed on an outer side of the hole (222) and configured to be welded to an electrode terminal (26) located in the hole (222); and a second connection structure (224), including a second metal. The second connection structure (224) is connected to the first connection structure (223). The second connection structure (224) is configured to be welded to a first sealing element (21) designed for sealing the hole (222).

## Description

### TECHNICAL FIELD

This application relates to the technical field of batteries, and in particular, to an end cap, a battery cell, a battery, and an electrical device.

### BACKGROUND

With the aggravation of environmental pollution, the new energy industry is attracting more and more attention. Battery technology is crucial to the development of the new energy industry.

In the development of battery technology, how to enhance the performance of a battery is a pressing challenge in the battery technology.

### SUMMARY

In view of the above situation, some embodiments of this application provide an end cap, a battery cell, a battery, and an electrical device to increase an output current of the battery, and in turn, improve performance of the battery.

According to a first aspect, an end cap is provided. The end cap includes: an end cap body, where a hole is created on the end cap body; a first connection structure, including a first metal, where the first connection structure is disposed on an inner side of the hole and configured to be welded to an electrode terminal located in the hole; and a second connection structure, including a second metal. The second connection structure is connected to the first connection structure. The second connection structure is configured to be welded to a first sealing element designed for sealing the hole.

In an embodiment of this application, the end cap includes an end cap body, a first connection structure, and a second connection structure. The end cap body includes a hole. The hole is configured to accommodate the electrode terminal. The first connection structure is located on the inner side of the hole, and is welded to the electrode terminal. That is, the first connection structure is contiguous to the hole. The second connection structure is connected to the first connection structure, and is welded to the first sealing element designed for sealing the hole. By disposing the first connection structure and the second connection structure, connecting the first connection structure to the electrode terminal, connecting the first connection structure to the second connection structure, and connecting the second connection structure to the first sealing element, this application enables a current to flow directly from the electrode terminal to the first sealing element, and then causes the current to flow to an external circuit connected to the first sealing element, thereby avoiding the current loss caused by the need to pass through the housing of the battery, and in turn, increasing the output current of the battery and improving the performance of the battery.

In a possible embodiment, the end cap body includes a first step structure disposed at an edge of the hole. The first step structure is configured to be embedded into the first connection structure.

In this embodiment of this application, when the first step structure is disposed at the edge of the hole and the first connection structure is embedded in the first step structure, the first connection structure can be positioned on the inner side of the hole, so as to enable welding of the first connection structure to the electrode terminal located in the hole. By disposing at the edge of the hole the first step structure for being embedded into the first connection structure, this application connects the first connection structure to the electrode terminal located in the hole, and in turn, allows the current to flow directly from the electrode terminal to the first connection structure.

In a possible embodiment, the end cap body further includes a second step structure. The second step structure is closer to the inner side of the hole than the first step structure. The second step structure is configured to lap the electrode terminal.

In this embodiment of this application, the electrode terminal is located in the hole. A second step structure is further disposed in the end cap body. Further, the second step structure is closer to the inner side of the hole than the first step structure. That is, the second step structure is also contiguous to the hole. The second step structure is configured to lap the electrode terminal, thereby enabling connection of the electrode terminal to the first connection structure in the first step structure. By disposing in the end cap body the second step structure configured to lap the electrode terminal, and letting the second step structure be closer to the inner side of the hole than the first step structure, this application can place the electrode terminal stably in the hole and connect the electrode terminal to the first connection structure stably, thereby implementing a stable flow of current.

In a possible embodiment, the first connection structure includes a third step structure. The third step structure is configured to leave a clearance for a welding structure of the first connection structure and the electrode terminal.

In this embodiment of this application, the first connection structure located in the first step structure is welded to the electrode terminal lapped in the second step structure. Some welding structures, such as weld marks, may result from the welding between the first connection structure and the electrode terminal, thereby causing the surface of the first connection structure to be uneven. If the uneven surface of the first connection structure is in direct contact with other components, the normal use of the other components will be adversely affected. By disposing a third step structure in the first connection structure, other components can stay clear from the welding structure of the first connection structure and the electrode terminal, thereby ensuring the normal use of other components.

In a possible embodiment, the end cap body, the first connection structure, and the second connection structure are all annular.

In this embodiment of this application, by designing the end cap body, the first connection structure, and the second connection structure to be all annular, the first connection structure and the second connection structure are distributed in the end cap as much as practicable and reasonable, so as to implement smooth transmission of an electric current.

In a possible embodiment, in a first direction, a dimension of the first connection structure is 0.8 to 1 mm, and the first direction is parallel to an axis of the end cap.

In this embodiment of this application, the first connection structure is not only connected to the second connection structure, but also welded to the electrode terminal located in the hole. When the dimension of the first connection structure in the first direction is overly small, the welding between the first connection structure and the electrode terminal may be weak. By keeping the dimension of the first connection structure in the first direction within the range of 0.8 to 1 mm, the connection between the first connection structure and the electrode terminal is ensured to be firm, and a stable flow of current is achieved.

In a possible embodiment, in the first direction, a dimension of the second connection structure is 2 to 4 mm.

In this embodiment of this application, the second connection structure is not only connected to the first connection structure, but also connected to the first sealing element designed for sealing the hole. When the dimension of the second connection structure in the first direction is overly small, the welding between the second connection structure and the first sealing element may be weak. By keeping the dimension of the second connection structure in the first direction within the range of 2 to 4 mm, the connection between the second connection structure and the first sealing element is ensured to be firm, and a stable flow of current is achieved.

In a possible embodiment, in the first direction, a dimension of a third step structure is not less than 0.2 mm.

In this embodiment of this application, the third step structure is configured to leave a clearance for the welding structure of the first connection structure and the electrode terminal, so as to ensure normal use of other components around the first connection structure and the electrode terminal. By making the dimension of the third step structure in the first direction not less than 0.2 mm, other components are ensured to completely stay clear from the welding structure of the first connection structure and the electrode terminal, thereby further ensuring that the current can directly flow from the electrode terminal to the first sealing element.

In a possible embodiment, in a second direction, a dimension of the first connection structure on one side of an axis of the end cap is not less than 1 mm, and the second direction is perpendicular to the axis of the end cap.

In this embodiment of this application, in order to ensure a firm weld between the first connection structure and the electrode terminal, the dimension of the first connection structure in the first direction needs to meet the specified requirement. However, the first connection structure not only needs to be connected to the electrode terminal, but also needs to be connected to the second connection structure. If the dimension of the first connection structure in the second direction is overly small, the connection between the first connection structure and the second connection structure may be inferior. By making the dimension of the first connection structure on a single side in the second direction not less than 1 mm, the first connection structure can be connected to the second connection structure stably, and the electric current can be output stably.

In a possible embodiment, in the second direction, a dimension of the second connection structure on one side of the axis of the end cap is not less than 5 mm.

In this embodiment of this application, the second connection structure of an appropriate dimension can perfectly mate with components such as the electrode terminal and the end cap. By making the dimension of the second connection structure on a single side in the second direction not less than 5 mm, normal functionality of the end cap can be ensured.

In a possible embodiment, the electrode terminal is made of a material including copper. The first metal is nickel-plated steel or copper.

In this embodiment of this application, when the electrode terminal includes copper and the first metal in the first connection structure is copper or nickel-plated steel, the copper-containing electrode terminal can be directly welded to the first connection structure. By making the first metal in the first connection structure be copper or nickel-plated steel, the electrode terminal can be directly welded to the first connection structure to transmit a current efficiently and avoid current loss, thereby increasing the current flowing to the outside.

In a possible embodiment, the first sealing element is made of a material including aluminum. The second metal is aluminum.

In this embodiment of this application, when the first sealing element includes aluminum and the second metal in the second connection structure is aluminum, the aluminum-containing first sealing element can be directly welded to the second connection structure. Aluminum is cheap and easily available. The electrical connection between the battery and the outside can be implemented by the connection between the aluminum-containing end cap the busbar component made of aluminum, thereby reducing the cost of the battery and facilitating use in mass production. In addition, the second metal in the second connection structure is aluminum, thereby implementing a firm connection between the battery and the outside, avoiding current loss, and increasing the current flowing to the outside.

In a possible embodiment, the first connection structure is connected to the second connection structure by thermal bonding.

In this embodiment of this application, the end cap structure connected by thermal bonding possesses a relatively low internal resistance. In other words, when the first connection structure is connected to the second connection structure by thermal bonding, the current can be more efficiently transferred from the first connection structure to the second connection structure to implement transfer of a relatively large current between the battery and the outside, thereby improving performance of the battery.

According to a second aspect, a battery cell is provided, including: an electrode assembly; a housing with a first opening, configured to accommodate the electrode assembly; the end cap according to any one of the foregoing embodiments, where the end cap includes a second opening, and the end cap is configured to seal the first opening; and the first sealing element, configured to seal the second opening.

In a possible embodiment, in a first direction, the first sealing element includes a protruding portion relative to the end cap. The first direction is parallel to an axis of the end cap.

In this embodiment of this application, the second connection structure is welded to a connecting piece designed for sealing the hole of the end cap body. Some welding structures, such as weld marks, may result from the welding between the second connection structure and the connecting piece, thereby causing the surface of the second connection structure to be uneven. The first sealing element also needs to be connected to the busbar component. If the uneven surface of the second connection structure is in direct contact with the busbar component, the normal use of the busbar component will be adversely affected. By disposing a protruding portion on the first sealing element, the busbar component or other components can stay clear from the welding structure of the second connection structure and the first sealing element, thereby ensuring the normal use of the busbar component or other components.

In a possible embodiment, in the first direction, a dimension of the protruding portion is not less than 0.2 mm.

In this embodiment of this application, the protruding portion located on the first sealing element is configured to leave a clearance for the welding structure of the second connection structure and the first sealing element, so as to ensure normal use of other components around the second connection structure and the first sealing element. By making the dimension of the protruding portion in the first direction not less than 0.2 mm, other components are ensured to completely stay clear from the welding structure of the second connection structure and the first sealing element, thereby further ensuring that the current can directly flow from the electrode terminal to the first sealing element and then flow to the outside.

According to a third aspect, a battery is provided. The battery includes: a plurality of the battery cells according to the foregoing embodiment; and a busbar component, configured to electrically connect the plurality of battery cells.

According to a fourth aspect, this application provides an electrical device. The electrical device includes the battery disclosed in the foregoing embodiment. The battery is configured to provide electrical energy.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to an embodiment of this application;
FIG. 2 is a schematic exploded view of a battery according to an embodiment of this application;
FIG. 3 is a schematic exploded view of a battery cell according to an embodiment of this application;
FIG. 4 is a schematic structural diagram of a battery cell according to another embodiment of this application;
FIG. 5 is a schematic exploded view of an end cap according to an embodiment of this application;
FIG. 6 is a cross-sectional view of an end cap according to an embodiment of this application;
FIG. 7 is a close-up view of a region A shown in FIG. 6; and
FIG. 8 is a close-up view of a region B shown in FIG. 7.

List of reference numerals:
battery 100, first part 111, second part 112, controller 200, motor 300;
box 10, battery cell 20, first sealing element 21, end cap 22, negative electrode connection strap 23, electrode assembly 24, housing 25, electrode terminal 26, positive electrode connection strap 27, bottom cover 28, second sealing element 29;
end cap body 221, hole 222, first connection structure 223, second connection structure 224, upper plastic sheet 265, end cap strip 266, sealing ring 267, lower plastic sheet 268, first electrode terminal 261, second electrode terminal 262;
first step structure 2211, second step structure 2212, third step structure 2213, welding structure 2214, first direction X, second direction Y

### DETAILED DESCRIPTION OF EMBODIMENTS

To make the objectives, technical solutions, and advantages of the embodiments of this application clearer, the following gives a clear description of the technical solutions in the embodiments of this application with reference to the drawings in the embodiments of this application. Evidently, the described embodiments are merely a part of but not all of the embodiments of this application. All other embodiments derived by a person of ordinary skill in the art based on the embodiments of this application without making any creative effort fall within the protection scope of this application.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

In this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

The battery in some embodiments of this application may be a lithium-ion battery, a lithium metal battery, a lead-acid battery, a nickel-cadmium battery, a nickelhydrogen battery, a lithium-sulfur battery, a lithium-air battery, a sodium-ion battery, or the like. The type of the battery is not particularly limited herein.

To meet different power demands, a plurality of battery cells in a battery may be connected in series, parallel, or series-and-parallel pattern. The series-and-parallel pattern means a combination of series connection and parallel connection. Optionally, the plurality of battery cells may be connected in series, parallel, or series-and-parallel pattern to form a battery module, and then a plurality of battery modules may be connected in series, parallel, or series-and-parallel pattern to form the battery. In other words, the plurality of battery cells may directly form the battery, or form the battery modules that are then used to form the battery. The battery is further mounted in the electrical device to provide electrical energy for the electrical device.

Currently, the market trend shows that power batteries are applied in more and more fields. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

The applicant hereof has noticed that an existing cylindrical battery typically includes only one electrode terminal, and a material that is used on the cell for connecting to a busbar component of an external module is nickel-plated steel and aluminum. The busbar component of the module is mostly made of an aluminum bar, a nickel sheet, or a nickel-plated material. Therefore, when a current is generated inside the cylindrical battery, the current needs to pass through the housing of the cylindrical battery. The internal resistance of the housing is relatively high, thereby causing the output current of the cylindrical battery to be smaller, and in turn, causing a decline in the performance of the cylindrical battery.

In order to solve the problem of inferior performance of existing cylindrical batteries caused by the inability of the batteries to output a relatively large current, An embodiment of this application provides an end cap. With the end cap, a cylindrical battery fitted with two electrode terminals enables both the positive electrode terminal and the negative electrode terminal to be electrically connected to a busbar component directly. In this way, the current can flow from the electrode terminals to the end cap directly, and then flow to the first sealing element connected to the end cap without a need to pass through the housing of the battery cell, thereby increasing the output current of the battery cell and improving the performance of the battery.

It is hereby noted that the end cap provided in this application is applicable to, but not limited to use in, cylindrical batteries, especially the 4680 structure of cylindrical batteries.

The battery cell disclosed in embodiments of this application is applicable to, but not limited to use in, electrical devices such as a vehicle, watercraft, or aircraft. The battery cell, the battery, and the like disclosed in this application may be used to form a power supply system of the electrical device to increase the current of the cylindrical battery in the power supply system and improve performance of the cylindrical battery.

All technical solutions described herein are applicable to various battery-powered devices such as a mobile phone, a portable device, a laptop computer, an electric power cart, an electrical toy, an electric tool, an electric vehicle, a watercraft, and a spacecraft. The electric toy may include stationary or mobile electric toys, such as a game console, an electric car toy, an electric ship toy, and an electric airplane toy. The spacecraft may include an airplane, a rocket, a space shuttle, a spaceship, and the like.

Understandably, the technical solutions described in the embodiments of this application are not only applicable to the devices mentioned above, but also applicable to all battery-powered devices. However, for brevity, the following embodiments are described by using an electric vehicle as an example.

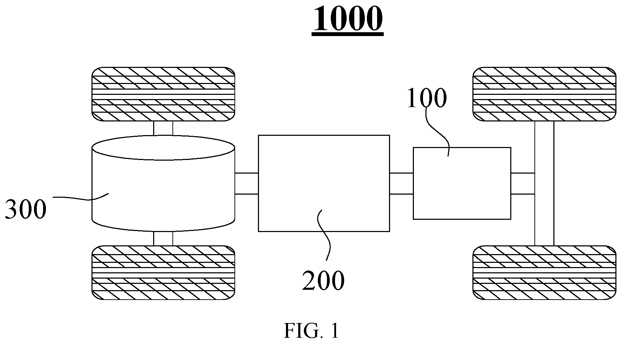

For example, FIG. 1 is a schematic structural diagram of a vehicle 1000 according to some embodiments of this application. The vehicle 1000 may be an oilfueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

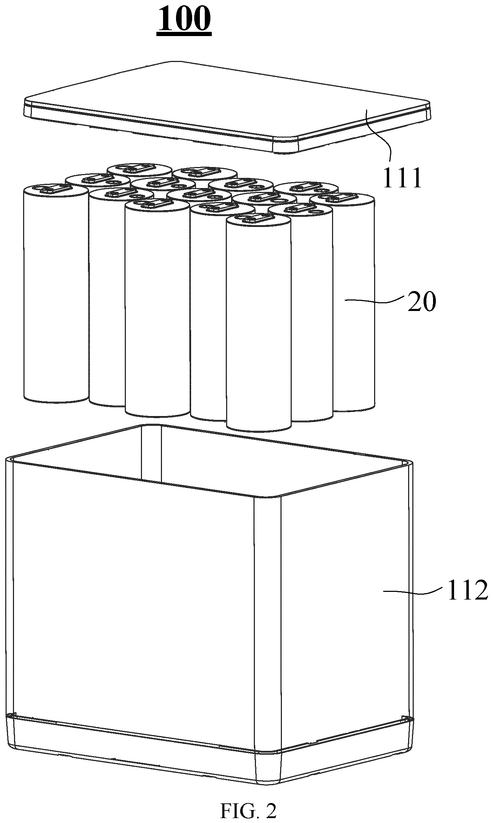

For example, FIG. 2 is a schematic structural diagram of a battery 100 according to an embodiment of this application. The battery 100 may include a plurality of battery cells 20. The battery 100 may further include a box 10 (or referred to as a casing) in addition to the battery cell. The box 10 is hollowed out inside. A plurality of battery cells 20 are accommodated in the box 10. As shown in FIG. 2, the box 10 may include two parts, herein referred to as a first part 111 and a second part 112 respectively. The first part 111 and the second part 112 are snap-fitted together. The shapes of the first part 111 and the second part 112 may depend on the shape of a plurality of battery cells 20 combined. An opening may be created on both the first part 111 and the second part 112. For example, the first part 111 and the second part 112 each may be a hollow cuboid, and each may include one opened surface. The opening of the first part 111 is opposite to the opening of the second part 112. The first part 111 and the second part 112 are snap-fitted to each other to form a box 10 that includes a closed cavity. The plurality of battery cells 20 are combined and connected in parallel, series, or series-and-parallel pattern, and then placed into the box that is formed by snap-fitting the first part 111 and the second part 112.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box. Alternatively, to make up a battery 100, the plurality of battery cells 20 may be connected in series, parallel, or series-and-parallel pattern to form a battery module first, and then a plurality of battery modules are connected in series, parallel, or series-and-parallel pattern to form a whole and accommodated in the box. The battery 100 may further include other structures. For example, the battery 100 may further include a busbar component (not shown in the drawing). The busbar component is configured to implement an electrical connection between the plurality of battery cells 20.

Each battery cell 20 may be, but is not limited to, a secondary battery or primary battery; or, may be a lithium-sulfur battery, a sodium-ion battery, or a magnesium-ion battery.

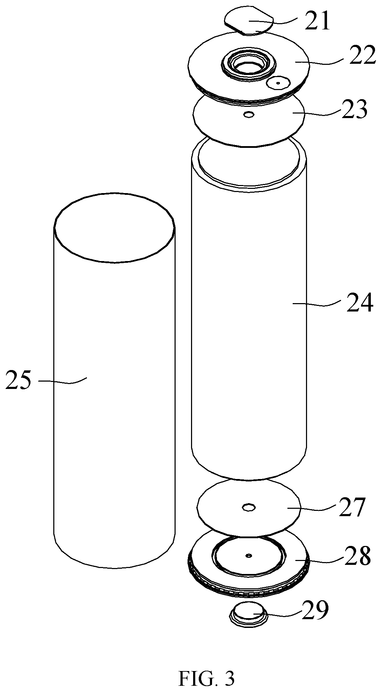

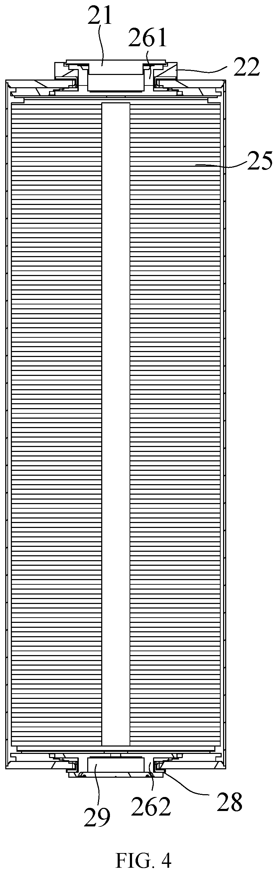

FIG. 3 is a schematic exploded view of a battery cell according to an embodiment of this application; and FIG. 4 is a schematic structural diagram of a battery cell 20 according to another embodiment of this application. As shown in FIG. 3 and FIG. 4, the battery cell 20 may include a first sealing element 21, an end cap 22, a negative electrode connection strap 23, an electrode assembly 24, a housing 25, a positive electrode connection strap 27, a bottom cover 28, and a second sealing element 29. The housing 25 combines with the first sealing element 21 and the second sealing element 29 to form a shell or a battery case. The wall of the housing 25 and the walls of the first sealing element 21 and the second sealing element 29 are all referred to as walls of the battery cell 20. The shape of the housing 25 depends on the shape of one or more electrode assemblies 24 combined together. When the housing 25 is a hollow cylinder, an end face of the housing 25 may be an opened face. That is, this end face is not walled so that the inside of the housing 25 communicates with the outside. As can be seen from FIG. 3, the housing 25 of the cylindrical cell 20 includes two circular end faces. The part between the two circular end face is a cylinder body. The cylinder body may include an electrode assembly 24. The end cap 22 and the bottom cover 27 cover an upper opening and a lower opening respectively and are connected to the housing 25, and, through the first sealing element 21 and the second sealing element 29, form a closed cavity configured to accommodate the electrode assembly 24. The housing 25 is filled with an electrolyte such as an electrolyte solution.

The battery cell 20 further includes electrode terminals 26. The electrode terminals 26 are inserted into the end cap 22 and the bottom cover 28 respectively to get electrically connected to the first sealing element 21 and the second sealing element 29 respectively. More specifically, the electrode terminal 26 includes a first electrode terminal 261 and a second electrode terminal 262. The first electrode terminal 261 is opposite to the second electrode terminal 262.

The battery cell 20 may further include a current collecting component, configured to electrically connect the electrode assembly 24 to the electrode terminal 26.

In addition, each electrode assembly 24 includes two tabs, such as a first tab and a second tab. The first tab and the second tab are of opposite polarities. For example, when the first tab is a positive tab, the second tab is a negative tab. For another example, the first tab is a copper tab, and the second tab is an aluminum tab. The first tabs of one or more electrode assemblies 24 are connected to one electrode terminal 26 by one current collecting component, and the second tabs of one or more electrode assemblies 24 are connected to another electrode terminal 26 by another current collecting component.

In an embodiment of this application, the first tab and the second tab of the battery cell 20 are disposed at two ends respectively. Unless otherwise expressly specified, in the following description, the first tab is a copper tab, and the second tab is an aluminum tab.

In some embodiments, the bottom cover 28 may be omitted in the battery cell 20. In this case, the aluminum tab may be directly connected to the second sealing element 29.

In the battery cell 20, one or more electrode assemblies 24 may be disposed depending on actual use requirements. As shown in FIG. 4, one electrode assembly 24 is disposed in the battery cell 20.

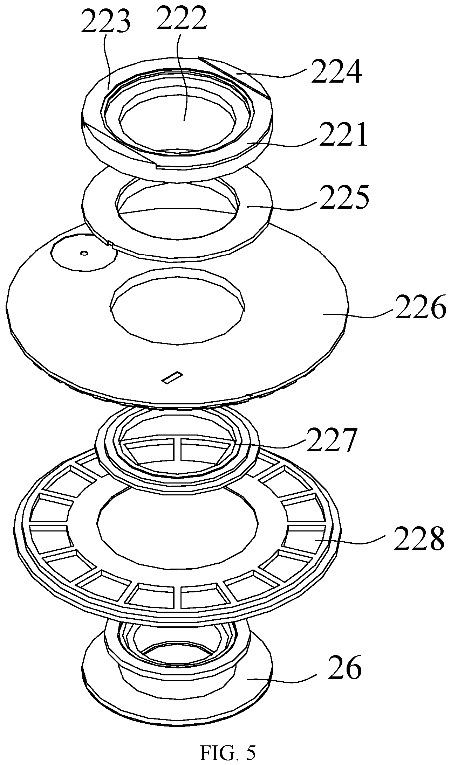

FIG. 5 is a schematic exploded view of an end cap 22 according to an embodiment of this application. As shown in FIG. 5, the end cap 22 includes: an end cap body 221, where a hole 222 is created on the end cap body 221; a first connection structure 223, including a first metal, where the first connection structure 223 is disposed on an outer side of the hole 222 and configured to be welded to an electrode terminal 26 located in the hole 222; and a second connection structure 224, including a second metal. The second connection structure 224 is connected to the first connection structure 223. The second connection structure 224 is configured to be welded to a first sealing element 21 designed for sealing the hole 222.

As shown in FIG. 5, the end cap 22 may further include an upper plastic sheet 225, an end cap strip 226, a sealing ring 227, and a lower plastic sheet 228.

In an embodiment of this application, the electrode terminal 26 passes through the hole 222 to get connected to the end cap 22. The electrode terminals 26 are a component used for electrical connection. To be specific, the current generated by the electrode assembly 24 is transmitted to the positive and negative electrodes of the battery cell 20 through the electrode terminals 26.

More specifically, the first electrode terminal 261 is connected to the end cap 22. The first electrode terminal 261 is electrically connected to the copper tab. In other words, the current generated by the electrode assembly 24 is transmitted to the end cap 22 through the first electrode terminal 261 at one end, and then transmitted to the first sealing element 21 and is transmitted to the second sealing element 29 at the second electrode terminal 262 through the second electrode terminal 262 at the other end. Both the first sealing element 21 and the second sealing element 29 are connected to the busbar component. In this way, the current can flow directly from the electrode assembly 24 to the outside, without passing through the housing 25 of the battery cell 20.

It is hereby noted that the first connection structure 223 needs to be connected to the first electrode terminal 261 by welding. If the first connection structure 223 is connected to the first electrode terminal 261 by other means, then the internal resistance between the first connection structure and the first electrode terminal will be relatively large, thereby still causing current loss of the battery cell 20. Therefore, the first metal included in the first connection structure 223 is necessarily a metal that can be welded to the first electrode terminal 261.

In addition, the hole 222 serves to accommodate the first electrode terminal 261. Therefore, the size of the hole 222 needs to be set depending on the size of the electrode assembly 24 or the first electrode terminal 261. This application does not impose any limitation on the specific size of the hole 222.

The end cap 22 includes an end cap body 221, a first connection structure 223, and a second connection structure 224. The end cap body 221 includes a hole 222. The hole 222 is configured to accommodate the first electrode terminal 261. The first connection structure 223 is located on the inner side of the hole 222, and is welded to the first electrode terminal 261. That is, the first connection structure 223 is contiguous to the hole 222. The second connection structure 224 is connected to the first connection structure 223, and is welded to the first sealing element 21 designed for sealing the hole 222. When the first connection structure 223 is connected to the first electrode terminal 261, electrical connection is implemented between the first electrode terminal 261 and the first connection structure 223. When the first connection structure 223 is connected to the second connection structure 224, electrical connection is implemented between the first connection structure 223 and the second connection structure 224. When the first sealing element 21 is connected to the second connection structure 224, electrical connection is implemented between the second connection structure 224 and the first sealing element 21.

In the above technical solution, by disposing the first connection structure 223 and the second connection structure 224, connecting the first connection structure 223 to the first electrode terminal 261, connecting the first connection structure 223 to the second connection structure 224, and connecting the second connection structure 224 to the first sealing element 21, this application enables a current to flow directly from the first electrode terminal 261 to the first sealing element 21, and then causes the current to flow to a busbar component connected to the first sealing element 21, thereby avoiding the current loss caused by the need to pass through the housing 25 of the battery, and in turn, increasing the output current of the battery cell 20 and improving the performance of the battery 100.

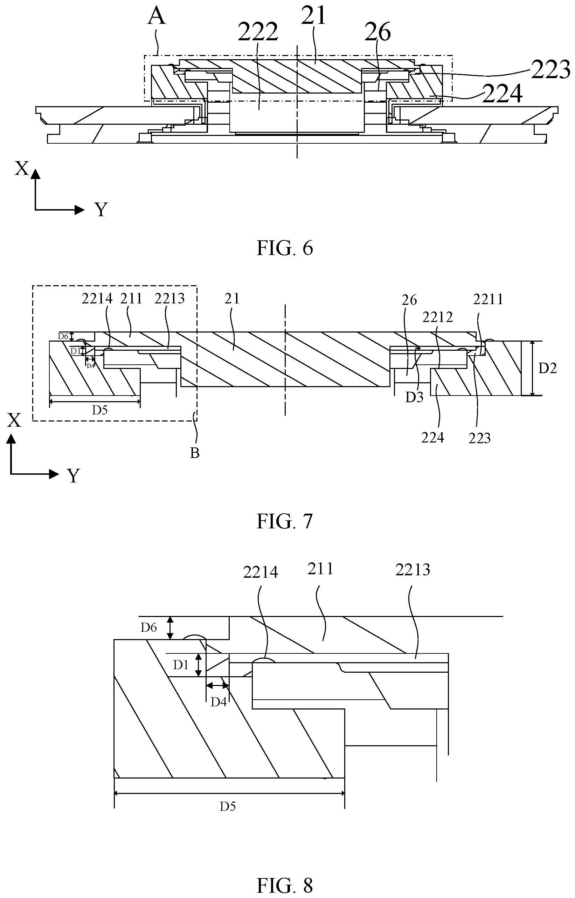

FIG. 6 is a cross-sectional view of an end cap 22 according to an embodiment of this application. FIG. 7 is a close-up view of a region A shown in FIG. 6. In some embodiments, the end cap body 221 includes a first step structure 2211 disposed at an edge of the hole 222. The first step structure 2211 is configured to be embedded into the first connection structure 223.

When the first step structure 2211 is disposed at the edge of the hole 222 and the first connection structure 223 is embedded in the first step structure 2211, the first connection structure 223 can be positioned on the inner side of the hole 221, so as to enable welding of the first connection structure 223 to the first electrode terminal 261 located in the hole 221.

It is hereby noted that both the inner side of the hole 222 and the edge of the hole 222 are regions that are not physically isolated from the hole 222, but are connected to the hole 222.

In the above technical solution, by disposing at the edge of the hole 222 the first step structure 2211 for being embedded into the first connection structure 223, this application connects the first connection structure 223 to the first electrode terminal 261 located in the hole 222, and in turn, allows the current to flow directly from the first electrode terminal 261 to the first connection structure 223.

In some embodiments, the end cap body 221 further includes a second step structure 2212. The second step structure 2212 is closer to the inner side of the hole 222 than the first step structure 2211. The second step structure 2212 is configured to lap the first electrode terminal 261.

As mentioned earlier, the first electrode terminal 261 is located in the hole 222. A second step structure 2212 is further disposed in the end cap body 221. Further, the second step structure 2212 is closer to the inner side of the hole 222 than the first step structure 2211. That is, the second step structure 2212 is also contiguous to the hole 222. In other words, the second step structure 2212 is connected to the hole 222. The second step structure 2212 is configured to lap the first electrode terminal 261, thereby enabling connection of the first electrode terminal 261 to the first connection structure 223 on the first step structure 2211.

In the above technical solution, by disposing in the end cap body 221 the second step structure 2212 configured to lap the first electrode terminal 261, and letting the second step structure 2212 be closer to the inner side of the hole 222 than the first step structure 2211, this application can place the first electrode terminal 261 stably in the hole 222 and connect the first electrode terminal to the first connection structure 223 stably, thereby implementing a stable flow of current.

In some embodiments, the first connection structure 223 includes a third step structure 2213. The third step structure 2213 is configured to leave a clearance for a welding structure 2214 of the first connection structure 223 and the first electrode terminal 261.

The first connection structure 223 located in the first step structure 2211 is welded to the first electrode terminal 261 lapped in the second step structure 2212. Some welding structures 2214, such as weld marks, may result from the welding between the first connection structure and the electrode terminal, thereby causing the surface of the first connection structure 223 to be uneven. If the uneven surface of the first connection structure 223 is in direct contact with other components, the normal use of the other components will be adversely affected.

For example, in some embodiments of this application, the second connection structure 224 also needs to be welded to the first sealing element 21. The first sealing element 21 is in contact with the surface of the first connection structure 223. When the surface of the first connection structure 223 includes an uneven welding structure 2214, the welding structure may interfere with the welding or normal use of the end cap 22.

In the above technical solution, by disposing a third step structure 2213 in the first connection structure 223, other components can stay clear from the welding structure 2214 of the first connection structure 223 and the first electrode terminal 261, thereby ensuring the normal use of other components.

In some embodiments, the end cap body 221, the first connection structure 223, and the second connection structure 224 are all annular.

When the electrode assembly 24 generates a current, the current is transmitted to the first electrode terminal 261 first, and then transmitted to the first connection structure 223 by the first electrode terminal 261, and then transmitted to the second connection structure 224 by the first connection structure 223, and then transmitted to the first sealing element 21 by the second connection structure 224, and finally transmitted to other external components such as a busbar component by the first sealing element 21, thereby enabling a plurality of battery cells 20 to form an electrically connected battery module. Therefore, theoretically, the technical solution works as long as the parts that need to transmit the current are set to be the first connection structure 223 and the second connection structure 224, respectively. However, in order to transmit the current more efficiently, both the first connection structure 223 and the second connection structure 224 may be made to be annular. Nevertheless, in practical applications, the producer may dispose the corresponding parts based on the actual production requirements. This application does not limit the specific positions of the first connection structure 223 and the second connection structure 224 and the like in the end cap 22.

In the above technical solution, by designing the end cap body 221, the first connection structure 223, and the second connection structure 224 to be all annular, the first connection structure 223 and the second connection structure 224 are distributed in the end cap 22 as much as practicable and reasonable, so as to implement smooth transmission of an electric current.

FIG. 8 is a close-up view of a region B shown in FIG. 7. As shown in FIG. 7 and FIG. 8, in some embodiments, in a first direction X, a dimension D1 of the first connection structure 223 is 0.8 to 1 mm, and the first direction X is parallel to an axis of the end cap 22.

The first connection structure 223 is not only connected to the second connection structure 224, but also welded to the first electrode terminal 261 located in the hole 222. When the dimension D1 of the first connection structure 223 in the first direction X is overly small, the welding between the first connection structure 223 and the first electrode terminal 261 may be weak.

For example, in an embodiment of this application, the dimension D1 of the first connection structure 223 in the first direction X may be 0.85 mm, 0.9 mm, 1 mm, or the like. The value of D1 is not particularly limited herein, as long as the engineering requirements are satisfied.

In the above technical solution, by keeping the dimension D1 of the first connection structure 223 in the first direction X within the range of 0.8 to 1 mm, the connection between the first connection structure 223 and the first electrode terminal 261 is ensured to be firm, and a stable flow of current is achieved.

In some embodiments, in the first direction X, a dimension D2 of the second connection structure 224 is 2 to 4 mm.

For example, in an embodiment of this application, the dimension D2 of the second connection structure 224 in the first direction X may be 2 mm, 3 mm, 3.5 mm, 4 mm, or the like. The value of D3 is not particularly limited herein, as long as the engineering requirements are satisfied.

The second connection structure 224 is not only connected to the first connection structure 223, but also connected to the first sealing element 21 designed for sealing the hole 222. When the dimension D2 of the second connection structure 224 in the first direction X is overly small, the welding between the second connection structure 224 and the first sealing element 21 may be weak.

In the above technical solution, by keeping the dimension D2 of the second connection structure 224 in the first direction X within the range of 2 to 4 mm, the connection between the second connection structure 224 and the first sealing element 21 is ensured to be firm, and a stable flow of current is achieved.

In some embodiments, in the first direction X, a dimension D3 of the third step structure 2213 is not less than 0.2 mm.

For example, in an embodiment of this application, the dimension D3 of the third step structure 2213 in the first direction X may be 0.2 mm, 0.3 mm, 0.35 mm, 0.4 mm, or the like. The value of D3 is not particularly limited herein, as long as the engineering requirements are satisfied.

The third step structure 2213 is configured to leave a clearance for the welding structure 2214 of the first connection structure 223 and the first electrode terminal 261, so as to ensure normal use of other components around the first connection structure 223 and the first electrode terminal 261.

In the above technical solution, by making the dimension D3 of the third step structure 2213 in the first direction X not less than 0.2 mm, other components are ensured to completely stay clear from the welding structure 2214 of the first connection structure 223 and the first electrode terminal 261, thereby further ensuring that the current can directly flow from the first electrode terminal 261 to the end cap 22.

In some embodiments, in a second direction Y, a dimension D4 of the first connection structure 223 on one side of the axis of the first sealing element 21 is not less than 1 mm. The second direction Y is perpendicular to the axis of the end cap 22.

In order to ensure a firm weld between the first connection structure 223 and the first electrode terminal 26126, the dimension D1 of the first connection structure 223 in the first direction X needs to meet the specified requirement. However, the first connection structure 223 not only needs to be connected to the first electrode terminal 261, but also needs to be connected to the second connection structure 224. If the dimension D4 of the first connection structure 223 in the second direction Y is overly small, the connection between the first connection structure and the second connection structure 224 may be inferior.

It is hereby noted that, as can be seen from the cross-sectional view of the end cap 22, the end cap body 221, the first connection structure 223, and the second connection structure 224 are all left-right symmetrical. The first connection structures 223 existent on both sides are welded to the first electrode terminal 261 separately. Therefore, on a single side, the dimension D4 of the first connection structure 223 in the second direction Y is not less than 1 mm.

For example, in an embodiment of this application, the dimension D4 of the first connection structure 223 on a single side in the second direction Y may be 1 mm, 1.5 mm, 2 mm, or the like. The value of D3 is not particularly limited herein, as long as the engineering requirements are satisfied.

In the above technical solution, by making the dimension D4 of the first connection structure 223 on a single side in the second direction Y not less than 2 mm, the first connection structure 223 can be connected to the second connection structure 224 stably, and the electric current can be output stably.

In some embodiments, in the second direction Y, a dimension D5 of the second connection structure 224 on one side of the axis of the end cap 22 is not less than 5 mm.

For example, in an embodiment of this application, the dimension D4 of the second connection structure 224 on a single side in the second direction Y may be 2 mm, 3 mm, 4 mm, or the like. The value of D3 is not particularly limited herein, as long as the engineering requirements are satisfied.

The second connection structure 224 of an appropriate dimension can perfectly mate with components such as the first electrode terminal 261 and the first sealing element 21. Similarly, the second connection structures 224 existent on both sides are welded to the first sealing element 21 separately. Therefore, on a single side, the dimension D5 of the second connection structure 224 in the second direction Y is not less than 5 mm.

In the above technical solution, by making the dimension D5 of the second connection structure 224 on a single side in the second direction Y not less than 5 mm, normal functionality of the end cap 22 can be ensured.

In some embodiments, the electrode terminal 26 is made of a material including copper. The first metal is nickel-plated steel or copper.

As mentioned earlier, the first connection structure 223 needs to be connected to the first electrode terminal 261 by welding. Therefore, the first metal in the first connection structure 223 is necessarily a metal that can be welded to the first electrode terminal 261. When the electrode terminal 26, more specifically, the first electrode terminal 261, is made of a material including copper, and the first metal in the first connection structure 223 is copper or nickel-plated steel, the copper-containing first electrode terminal 261 can be directly welded to the first connection structure 223.

In the above technical solution, by making the first metal in the first connection structure 223 be copper or nickel-plated steel, the electrode terminal 26 can be directly welded to the first connection structure 223 to transmit the current efficiently and avoid current loss, thereby increasing the current flowing to the outside.

In some embodiments, the first sealing element 21 is made of a material including aluminum. The second metal is aluminum.

When the first sealing element 21 includes aluminum and the second metal in the second connection structure 224 is aluminum, the aluminum-containing first sealing element 21 can be directly welded to the second connection structure 224.

Unless otherwise expressly specified herein, the material of the second sealing element 29 also includes aluminum.

In the above technical solution, aluminum is cheap and easily available. The electrical connection between the battery cell 20 and the outside can be implemented by the connection between the aluminum-containing first sealing element 21 and the busbar component made of aluminum, thereby reducing the cost of the battery 100 and facilitating use in mass production. In addition, the second metal in the second connection structure 224 is aluminum, thereby implementing a firm connection between the battery cell 20 and the outside, avoiding current loss, and increasing the current flowing to the outside.

In an embodiment of this application, the first tab in the battery cell 20 is made of copper. Therefore, the material of the electrode terminal 26 connected to the first tab needs to include copper. In other words, the material of the first electrode terminal 261 includes copper. The second tab is made of aluminum. Therefore, the material of the electrode terminal 26 connected to the second tab needs to include aluminum. In other words, the material of the second electrode terminal 292 includes aluminum. Referring to FIG. 4, the first tab is electrically connected to the first electrode terminal 261, the first electrode terminal 261 is electrically connected to the end cap 22, and then the end cap 22 is electrically connected to an external busbar component through the first sealing element 21. The second tab is electrically connected to the second electrode terminal 262, the second electrode terminal 262 is electrically connected to the second sealing element 29, and then the second sealing element 29 is electrically connected to the external busbar component.

In some embodiments, the first connection structure 223 is connected to the second connection structure 224 by thermal bonding.

The hot bonding here is hot rolling. Hot rolling is a process of rolling performed above a crystallization temperature. During hot rolling, the metal is of a high plasticity and a low deformation resistance, thereby greatly reducing the energy consumption during metal deformation. The hot rolling process can improve the processing performance of a metal and an alloy. This process crushes cast-state coarse grains, promotes healing of cracks, reduces or eliminates casting defects, changes a cast-state structure into a deformation-induced structure, and improves the processing performance of the alloy. In an embodiment of this application, copper and aluminum are bonded together at the crystallization temperatures of copper and aluminum.

In the above technical solution, the end cap 22 structure connected by thermal bonding possesses a relatively low internal resistance. In other words, when the first connection structure 223 is connected to the second connection structure 224 by thermal bonding, the current can be more efficiently transferred from the first connection structure 223 to the second connection structure 224 to implement transfer of a relatively large current between the battery cell 20 and the outside, thereby improving the performance of the battery 100.

An embodiment of this application further provides a battery cell 20. The battery cell 20 includes: an electrode assembly 24; a housing 25 with a first opening, configured to accommodate the electrode assembly 24; the end cap 22 according to any one of the foregoing embodiments, where the end cap includes a second opening, and the end cap 22 is configured to seal the first opening; and a first sealing element 21, configured to seal the second opening.

As shown in FIG. 7, in some embodiments, in a first direction X, the first sealing element 21 includes a protruding portion 211 relative to the end cap 22. The first direction X is parallel to an axis of the end cap 22.

The second connection structure 224 is welded to the first sealing element 21 designed for sealing the hole 222 of the end cap body 221. Some welding structures 2214, such as weld marks, may result from the welding between the second connection structure and the first sealing element, thereby causing the surface of the second connection structure 224 to be uneven. The first sealing element 21 also needs to be connected to the busbar component. If the uneven surface of the second connection structure 224 is in direct contact with the busbar component, the normal use of the busbar component will be adversely affected.

In the above technical solution, by disposing a protruding portion 211 on the first sealing element 21, the busbar component or other components can stay clear from the welding structure 2214 of the second connection structure 224 and the first sealing element 21, thereby ensuring the normal use of the busbar component or other components.

In some embodiments, in the first direction X, a dimension D6 of the protruding portion 211 is not less than 0.2 mm.

The protruding portion 211 located on the first sealing element 21 is configured to leave a clearance for the welding structure 2214 of the second connection structure 224 and the first sealing element 21, so as to ensure normal use of other components around the second connection structure 224 and the first sealing element 21.

In an embodiment of this application, the dimension of the protruding portion 211 in the first direction X may be 0.2 mm, 0.25 mm, or 0.3 mm. The value of the dimension is not particularly limited herein, as long as the engineering requirements are satisfied.

In the above technical solution, by making the dimension D6 of the protruding portion 211 in the first direction X not less than 0.2 mm, other components are ensured to completely stay clear from the welding structure 2214 of the second connection structure 224 and the first sealing element 21, thereby further ensuring that the current can directly flow from the electrode terminal 26 to the first sealing element 21 and then flow to the outside.

It is hereby noted that the battery cell 20 according to an embodiment of this application includes two types of electrode terminals 26: a copper-containing first electrode terminal 261, and an aluminum-containing second electrode terminal 262. The two types of electrode terminals 26 are disposed at two ends of the battery cell 20 respectively. To be specific, the first electrode terminal 261 is connected to a copper tab, and the second electrode terminal 262 is connected to an aluminum tab. The first electrode terminal 261 is connected to the end cap 22, and then connected to an external busbar component through the first sealing element 21. The second electrode terminal 262 is connected to the bottom cover 28, and then connected to the external busbar component through the second sealing element 29.

An embodiment of this application further provides a battery 100. The battery includes the battery cell 20 disclosed in the preceding embodiment.

An embodiment of this application further provides an electrical device. The electrical device may include the battery 100 according to any one of the foregoing embodiments, and the battery is configured to provide electrical energy for the electrical device. Optionally, the electrical device may be a vehicle, watercraft, or spacecraft.

In the battery cell 20, the first electrode terminal 261 and the second electrode terminal 262 are disposed opposite to each other at two ends of the battery cell 20. On the one hand, the first electrode terminal 261 connected to the first tab (that is, the copper tab) is connected to the end cap 22 containing the first connection structure 223 and the second connection structure 224, and is then connected to the first sealing element 21. On the other hand, the second electrode terminal 262 connected to the second tab (that is, the aluminum tab) is connected to the second sealing element 29, thereby transmitting the current generated by the electrode assembly 24 to the outside directly, avoiding current loss caused by the need to pass through the housing 25, and in turn, increasing the output current of the battery cell 20 and improving the performance of the battery 100.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. An end cap, **characterized in that** the end cap comprises:
an end cap body, wherein a hole is created on the end cap body;
a first connection structure, comprising a first metal, wherein the first connection structure is disposed on an inner side of the hole and configured to be welded to an electrode terminal located in the hole; and
a second connection structure, comprising a second metal, wherein the second connection structure is connected to the first connection structure, and the second connection structure is configured to be welded to a first sealing element designed for sealing the hole.

2. The end cap according to claim 1, **characterized in that** the end cap body comprises a first step structure disposed at an edge of the hole, and the first step structure is configured to be embedded into the first connection structure.

3. The end cap according to claim 2, **characterized in that** the end cap body further comprises a second step structure, the second step structure is closer to the inner side of the hole than the first step structure, and the second step structure is configured to lap the electrode terminal.

4. The end cap according to any one of claims 1 to 3, **characterized in that** the first connection structure comprises a third step structure, and the third step structure is configured to leave a clearance for a welding structure of the first connection structure and the electrode terminal.

5. The end cap according to any one of claims 1 to 4, **characterized in that** the end cap body, the first connection structure, and the second connection structure are all annular.

6. The end cap according to any one of claims 1 to 5, **characterized in that**, in a first direction, a dimension of the first connection structure is 0.8 to 1 mm, and the first direction is parallel to an axis of the end cap.

7. The end cap according to claim 6, **characterized in that**, in the first direction, a dimension of the second connection structure is 2 to 4 mm.

8. The end cap according to claim 6 or 7, **characterized in that**, in the first direction, a dimension of a third step structure is not less than 0.2 mm.

9. The end cap according to any one of claims 1 to 8, **characterized in that**, in a second direction, a dimension of the first connection structure on one side of an axis of the end cap is not less than 1 mm, and the second direction is perpendicular to the axis of the end cap.

10. The end cap according to claim 9, **characterized in that**, in the second direction, a dimension of the second connection structure on one side of the axis of the end cap is not less than 5 mm.

11. The end cap according to any one of claims 1 to 10, **characterized in that** the electrode terminal is made of a material comprising copper, and the first metal is nickel-plated steel or copper.

12. The end cap according to any one of claims 1 to 11, **characterized in that** the first sealing element is made of a material comprising aluminum, and the second metal is aluminum.

13. The end cap according to any one of claims 1 to 12, **characterized in that** the first connection structure is connected to the second connection structure by thermal bonding.

14. A battery cell, **characterized in that** the battery cell comprises:
an electrode assembly;
a housing with a first opening, configured to accommodate the electrode assembly;
the end cap according to any one of claims 1 to 13, wherein the end cap comprises a second opening, and the end cap is configured to seal the first opening; and
the first sealing element, configured to seal the second opening.

15. The battery cell according to claim 14, **characterized in that**, in a first direction, the first sealing element comprises a protruding portion relative to the end cap, and the first direction is parallel to an axis of the end cap.

16. The battery cell according to claim 15, **characterized in that**, in the first direction, a dimension of the protruding portion is not less than 0.2 mm.

17. A battery, **characterized in that** the battery comprises:
a plurality of the battery cells according to any one of claims 14 to 16; and
a busbar component, configured to electrically connect the plurality of battery cells.

18. An electrical device, **characterized in that** the electrical device comprises:
the battery according to claim 17, wherein the battery is configured to provide electrical energy.
